# EUROPÄISCHE PATENTSCHRIFT

(11) **EP 2 942 220 B1**
(45) Veröffentlichungstag und Bekanntmachung des Hinweises auf die Patenterteilung: **04.01.2017**
(21) Anmeldenummer: 15001016.3
(22) Anmeldetag: 09.04.2015
(51) Int. Cl.: B60K 11/02, B60K 11/08, B62D 25/12, F01P 11/10

(54) **FAHRZEUG MIT EINEM FRONTSEITIG ANGEORDNETEM LUFTKANAL SOWIE VERFAHREN ZUR STEUERUNG EINES LUFTSTROMS, INSBESONDERE EINES KÜHLLUFTSTROMS**
VEHICLE WITH A FRONT-INSTALLED AIR DUCT AND METHOD FOR CONTROLLING AN AIR FLOW, IN PARTICULAR A COLD AIR FLOW
VÉHICULE DOTÉ D'UNE GAINE D'AIR DISPOSÉE À L'AVANT ET PROCÉDÉ DE RÉGLAGE D'UN FLUX D'AIR, EN PARTICULIER UN FLUX D'AIR DE REFROIDISSEMENT

(30) Priorität: 07.05.2014 DE 102014006597
(43) Veröffentlichungstag der Anmeldung: 11.11.2015
(73) Patentinhaber: AUDI AG, 85045 Ingolstadt (DE)
(72) Erfinder: Pickl, Richard, 85095 Denkendorf (DE)

(56) Entgegenhaltungen:
- DE-A1- 3 437 556
- DE-A1-102006 054 772
- DE-C1- 723 728
- JP-A- S60 142 012
- JP-A- 2006 168 631
- US-A1- 2012 292 122

## Beschreibung

Die Erfindung betrifft ein Fahrzeug, insbesondere ein Kraftfahrzeug, nach dem Oberbegriff des Anspruchs 1.

Insbesondere bei Sportwägen mit starker Motorisierung ist es zur Optimierung der Motorkühlleistung bereits allgemein bekannt, einen Kühlluftkanal vorzusehen, der sich als separater Luftkanal von frontendseitig, insbesondere kühlergrillseitig angeordneten Lufteinlässen ausgehend nach oben in Richtung zur Fronthaube erstreckt und dort in einen oder mehrere Luftauslässe mündet. Im Kühlluftkanal selbst ist ein Kühler angeordnet, der regelmäßig als Modul ausgebildet ist und neben dem eigentlichen Kühleraggregat auch noch ein Klimagerät und/oder ein Lüftermodul aufweisen kann. Die fahrzeugfrontendseitig einströmende Kühlluft strömt hier dann im Kühlluftkanal über den Kühler und weiter über die fronthaubenseitigen Luftauslässe in die Umgebung aus.

Die fronthaubenseitigen, oftmals erhaben gegenüber der Fronthaubenoberseite ausgebildeten Luftauslässe beeinträchtigen oftmals den Cw-Wert eines Kraftfahrzeuges, weil es dort zu Strömungsturbulenzen und Verwirbelungen kommen kann. Zudem besteht die Gefahr, dass über die Luftauslässe Verunreinigungen, zum Beispiel Laub oder dergleichen in den Luftkanal eindringen und diesen verunreinigen kann. Ebenso kann zum Beispiel Schnee über die Luftauslässe in den Luftkanal eindringen und dort gegebenenfalls zu Vereisungen des Kühlers bzw. des Kühlkanals führen. All dies beeinträchtigt dann die Kühlleistung des Kühlers gegebenenfalls erheblich. Des Weiteren können die durch die fronthaubenseitigen Luftauslässe auf der Fronthaube ausgebildeten Kanten und Vorsprünge gegebenenfalls auch einen Aufprall auf die Fronthaube, insbesondere bei zum Beispiel Fußgängerkollisionen, beeinflussen.

Ein Beispiel für ein derartig ausgestattetes Fahrzeug findet sich in der GB 831 597, bei der Kühlluft über einen frontendseitigen Lufteinlass in einen Kühlluftkanal einströmt, in dem ein Kühler angeordnet ist. Der Kühlluftkanal mündet in der Fronthaube, wobei die fronthaubenseitigen Luftauslässe hier mit Luftleitklappen bestückt sein können, mittels denen die Strömungsrichtung der ausströmenden Kühlluft beeinflusst werden kann.

Aus der JP S60 142012 A ist ein gattungsbildendes Fahrzeug mit einem Lufteinlass für einen Luftkanal gezeigt. Der Luftkanal mündet in eine Fronthaube des Fahrzeugs. Ferner ist ein Stellelement angeordnet, mittels dem der fronthaubenseitige Luftauslass beispielsweise in Abhängigkeit der Kühlwassertemperatur verschließbar ist.

Die US 2012/292122 A1 beschreibt ein jalousienartiges Stellelement, mit dem ein in eine Fronthaube des Fahrzeugs mündender Luftkanal ganz oder teilweise verschließbar ist. Auch aus der DE 723 728 C ist eine verstellbare Klappenreihe an einem in eine Fronthaube des Fahrzeugs mündenden Luftkanal bekannt. Ferner beschreibt die JP 2006 168631 A einen durch eine Klappe verschließbaren fronthaubenseitigen Luftauslass eines Luftkanals.

Die DE 10 2006 054 772 A1 beschreibt ein mittels eines pneumatischen, hydraulischen oder elektrischen Antriebs bewegbares Frontteil eines Fahrzeugs, das derart bewegt wird, dass eine Lufteinlassöffnung zwischen dem unteren Rand des Frontteils und einem diesen gegenüberliegenden, etwa horizontal verlaufenden Karosserieteils gebildet ist und eine Luftauslassöffnung zwischen dem oberen Rand des Frontteils und einer Frontklappe gebildet ist.

In der DE 34 37 556 A1 ist eine Abdeckhaube zum Überdecken eines Scheibenwischers gezeigt, wobei die Abdeckhaube zur Kühlung des Motorraums geöffnet werden kann. Die Abdeckung ist dabei am unteren Abschnitt einer Windschutzscheibe angeordnet.

Demgegenüber ist es Aufgabe der vorliegenden Erfindung ein Fahrzeug, insbesondere ein Kraftfahrzeug, mit einem frontseitig angeordnetem Luftkanal vorzuschlagen, mittels dem die oben genannten Probleme hinsichtlich Cw-Wert, Verschmutzung bzw. Vereisung und im Hinblick auf einen Fronthaubenaufprall bei zum Beispiel Fußgängerkollisionen zuverlässig und in designtechnisch ansprechender Weise beseitigt werden können.

Diese Aufgabe wird gelöst mit den Merkmalen des Anspruchs 1. Vorteilhafte Ausgestaltungen sind Gegenstand der darauf rückbezogenen Unteransprüche.

Gemäß Patentanspruch 1 wird ein Fahrzeug, insbesondere ein Kraftfahrzeug, mit wenigstens einem fahrzeugfrontendseitig angeordneten Lufteinlass für wenigstens einen Luftkanal vorgeschlagen, der mit wenigstens einem Luftauslass in eine Fronthaube des Fahrzeugs mündet. Erfindungsgemäß ist vorgesehen, dass die Fronthaube wenigstens ein verlagerbares Stellelement aufweist, mittels dem der wenigstens eine fronthaubenseitige Luftauslass verschließbar ist. Bevorzugt ist dabei der wenigstens eine Luftkanal konkret ein unterhalb der Fronthaube verlaufender Kühlluftkanal, in dem ein Kühler, insbesondere ein mehrteiliges Kühlmodul (Kühlaggregat mitsamt Klimagerät und/oder Lüftermodul), und zwar insbesondere ein Motorkühler eines unterhalb der Fronthaube angeordneten Antriebsaggregats (Brennkraftmaschine und/oder Elektromaschine) des Fahrzeugs angeordnet ist.

Mit der erfindungsgemäßen Lösung wird somit der Luftkanal auf einfache Weise vor dem Eindringen von Verunreinigungen, Schnee oder dergleichen geschützt, so dass es zu keiner Beeinträchtigung der im Luftkanal angeordneten Funktionsteile, wie zum Beispiel des vorstehend genannten Kühlers, und damit auch zu keiner Beeinträchtigung dieser Funktionsteile kommen kann. Desweiteren kann mit einem derartigen fronthaubenseitigen, verschließbaren Luftauslass, wie dies nachfolgend noch näher im Detail beschriebenen wird, eine im Wesentlichen kanten- und stufenlose und damit eine im Wesentlichen ebene bzw. glatte Fronthaubenoberfläche ausgebildet werden, wenn sich das verlagerbare Stellelement in der Verschluss- bzw. Absperrstellung befindet. Dadurch können dann Aufprallsituationen bei zum Beispiel Fußgängerkollisionen positiv beeinflusst werden.

Gemäß einer besonders bevorzugten konkreten Ausgestaltung mündet der wenigstens eine fahrzeugfrontendseitige Lufteinlass im Bereich eines Kühlergrills und/oder in einen kühlergrillnahen Bereich des Frontendes, wobei sich dann der wenigstens eine Luftkanal von dort ausgehend in Hochachsenrichtung nach oben zur Fronthaube erstreckt.

Bei dem erfindungsgemäßen Luftkanal handelt es sich bevorzugt um einen separaten Kanal. Gegebenenfalls kann dieser aber auch Bestandteil eine Luftkanalsystems sein.

Das wenigstens eine verlagerbare Stellelement ist bevorzugt mit wenigstens einer Betätigungseinrichtung gekoppelt, mittels der das wenigstens eine Stellelement in eine bzw. die jeweils definiert vorgegebenen Stellungen verlagerbar ist. Die Betätigungseinrichtung ist besonders bevorzugt durch einen einfach aufgebauten und funktionssicher bedienbaren Aktuator, insbesondere einen elektrisch, hydraulisch oder pneumatisch betätigbaren Aktuator, gebildet. Desweiteren wird die wenigstens eine Betätigungseinrichtung bevorzugt mittels wenigstens einer Steuereinrichtung angesteuert und betätigt. Die Verlagerung des wenigstens einen verlagerbaren Stellelement erfolgt zudem vorzugsweise in Abhängigkeit von erfassten und/oder ermittelten und/oder vorgegebenen Parametern, bei denen es sich zum Beispiel um Umgebungs- und/oder Betriebs- und/oder Fahrparameter handeln kann, wie dies nachfolgend noch näher erläutert wird. Die Datenerfassung kann zum Beispiel mittels wenigstens einer Sensoreinrichtung des Fahrzeugs erfolgen. Selbstverständlich kann die Steuereinrichtung auch eine Rechnereinrichtung umfassen bzw. kann der Steuereinrichtung eine Rechnereinrichtung zugeordnet sein, in der die erfassten und/oder übermittelten Daten aus Assistenzsystemen und/oder von Erfassungseinrichtungen, wie zum Beispiel von Sensoren, ausgewertet und bei Erreichen entsprechender Schwellwerte und/oder Kriterien dann gegebenenfalls in Steuerbefehle umgesetzt werden.

Besonders vorteilhaft wirkt es sich auf den Cw-Wert aus, wenn der wenigstens eine Luftauslass in einem Unterdruckbereich der Fronthaube angeordnet ist, also in einem Fronthaubenbereich in oder an dem im Fahrbetrieb ein Unterdruck herrscht. In diesem Fall ist dann bevorzugt vorgesehen, dass der wenigstens eine Luftauslass zum Beispiel in der bezogen auf die Fahrzeuglängsrichtung vorderen und damit der Haubenkante zugewandten Hälfte der Fronthaube angeordnet ist. Die Anordnung des Luftauslasses im Unterdruckbereich bewirkt eine vorteilhafte Luftströmung aus dem wenigstens einen Luftauslass heraus, ohne dass es dort zu übermäßigen Turbulenzen und Verwirbelungen kommt, was sich, wie bereits zuvor ausgeführt, vorteilhaft auf den Cw-Wert auswirkt.

Gemäß einer weiteren besonders bevorzugten Ausgestaltung ist vorgesehen, dass das wenigstens eine verlagerbare Stellelement Bestandteil, und zwar vorzugsweise integral verlagerbarer Bestandteil, der Fronthaube ist. Bei einer derartigen Ausgestaltung bildet somit die Fronthaube in einer Doppelfunktion gleichzeitig auch das verlagerbare Stellelement aus. Besonders bevorzugt ist dabei eine Ausführungsform, bei der das verlagerbare Stellelement durch wenigstens ein Flächenelement gebildet ist. Ein derartiges Flächenelement kann fertigungstechnisch einfach in die Fronthaube integriert werden. Auch wenn grundsätzlich mehrere verlagerbare Stellelemente, zum Beispiel in der Art von plattenförmigen Flächenelementen, vorgesehen sein können, ist es von besonderem Vorteil, wenn zur Reduzierung der Bauteilvielfalt ein einziges verlagerbares Stellelement vorgesehen ist, das insbesondere durch ein einziges, plattenförmiges Flächenelement gebildet sein kann, da dieses besonders gut in die ohnehin flächige Fronthaube integrierbar ist bzw. integraler Bestandteil derselben bilden kann. Grundsätzlich kann das verlagerbare Stellelement jede beliebige Form aufweisen, wobei insbesondere für eine einfach verschwenkbare klappenartige Ausbildung und Anbindung an die Fronthaube eine rechteckförmige Außenkontur besonders bevorzugt ist.

Die Fronthaube selbst kann verschwenkbar oder nicht verschwenkbar am Fahrzeug angeordnet sein, wobei die Fronthaube als Motorhaube vorzugsweise ein Antriebsaggregat (Brennkraftmaschine und/oder Elektromaschine) des Fahrzeugs überdeckt.

Wie bereits zuvor ausgeführt, ist es, insbesondere im Hinblick auf die Anforderungen für Fußgängerkollisionen, vorteilhaft, wenn das wenigstens eine verlagerbare Stellelement so ausgebildet ist und/oder so an der Fronthaube angeordnet ist, dass dieses in der Absperrstellung oberflächenbündig in den jeweils angrenzenden Fronthaubenbereich übergeht. Besonders bevorzugt ist dabei eine im Wesentlichen naht- und kantenloser Übergang in die angrenzenden Fronthaubenbereiche, wodurch Aufprallkanten im eventuellen Aufprallbereich vermieden werden. Besonders bevorzugt ist dabei eine Ausgestaltung, bei der das wenigstens eine verlagerbare Stellelement so oberflächenbündig in den jeweils angrenzenden Fronthaubenbereich übergeht, dass im Stellelementbereich zusammen mit dem angrenzenden Fronthaubenbereichen eine durchgehend ebene und/oder glatte Fronthaubenoberfläche ausgebildet wird.

Das wenigstens eine verlagerbare Stelleelement könnte zur Freigabe des wenigstens einen Luftauslasses grundsätzlich in Hochachsenrichtung nach oben verlagerbar sein. Besonders bevorzugt ist jedoch eine Ausgestaltung, bei der das wenigstens eine verlagerbare Stellelement in einer dem wenigstens einen Luftauslass freigebenden Freigabestellung wenigstens bereichsweise in Hochachsenrichtung gegenüber der Absperrstellung und/oder gegenüber der Fronthaubenoberfläche abgesenkt ist. Dies hilft nämlich auch bei geöffnetem Luftauslass eine vorteilhafte Aerodynamik und dann günstige Cw-Wert-Verhältnisse zu schaffen.

Erfindungsgemäß ist vorgesehen, dass die Fronthaube wenigstens in einem Anbindungs- und/oder Anlenkbereich des, vorzugsweise in die Fronthaube integrierten, verlagerbaren Stellelementes dergestalt elastisch ausgebildet ist, dass das verlagerbare Stellelement dort durch die Ausnutzung der elastischen Materialeigenschaften in diesem Bereich der Fronthaube, insbesondere in der Art einer Schwenkklappe, schwenkbar an der Fronthaube gelagert ist. D.h., dass für die Verschwenkbarkeit des in der Art einer fronthaubenseitig freigeschnittenen bzw. fronthaubenseitig ausgeklinkten Schwenkklappe verlagerbaren und in die Fronthaube integrierten Stellelementes hier vorteilhaft die elastischen Materialeigenschaften der Fronthaube im Anbindungs- bzw. Anlenkbereich des Stellementes an der Fronthaube ausgenutzt werden. Unter einer elastischen Materialeigenschaft wird hierbei verstanden, dass die Fronthaube diesem, einen fronthaubenseitigen Anbindung- bzw. Anlenkbereich ausbildenden Schwenkbereich in jedwede gewünschte Verlagerungsposition verlagerbar bzw. verschwenkbar ist, und zwar ohne bleibende plastische bzw. dauerhafte Verformung. Zu diesem Zweck kann die Fronthaube zumindest bereichsweise aus einem Kunststoffmaterial und/oder zumindest bereichsweise aus einem diese Elastizitätseigenschaften aufweisenden Stahl- oder Blechmaterial hergestellt sein.

Gemäß einer besonders bevorzugten konkreten Ausgestaltung schließt sich das wenigstens eine verlagerbare Stelleelement in Fahrzeuglängsrichtung gesehen nach hinten zur Windschutzscheibe hin an den wenigstens einen und/oder an einen jeweils zugeordneten Luftauslass an. Eine derartige konkrete Ausgestaltung lässt sich besonders bevorzugt in eine modernen designtechnischen Anforderungen entsprechende Fronthaube integrieren. Insbesondere auch in Verbindung mit einer Ausgestaltung, bei der der wenigstens eine Luftauslass in der Freigabestellung des wenigstens einen verlagerbaren Stellelementes eine in Fahrzeuglängsrichtung gesehen im Wesentlichen nach hinten offene Luftauslassöffnung ausbildet. Dadurch lassen sich besonders vorteilhafte Ausströmverhältnisse erzielen, und zwar insbesondere ohne Turbulenzen und Verwirbelungen, die den Cw-Wert nachteilig beeinträchtigen können. Besonders bevorzugt ist in diesem Zusammenhang vorgesehen, dass der durch den wenigstens einen Luftauslassg ausströmende Luftstrom entlang des wenigstens einen, sich dort in der Freigabestellung, insbesondere rampenförmig nach hinten zur Windschutzscheibe hin anschließenden verlagerbaren Stellelement in Richtung Windschutzscheibe strömt.

Gemäß einer weiteren besonders bevorzugten Ausgestaltung ist vorgesehen, dass der wenigstens eine Luftauslass in der Freigabestellung des wenigstens einen verlagerbaren Stellelement als im Wesentlichen in Fahrzeugquerrichtung verlaufender Luftauslassschlitz ausgebildet ist, und zwar insbesondere dergestalt, dass ein einziger Luftauslassschlitz in einen bezogen auf die Fahrzeugquerrichtung mittleren bzw. zentralen Fronthaubenbereich angeordnet ist. Insbesondere mit letzterer Maßnahme wird unter Beibehaltung eines ansprechenden symmetrischen Designs auch vorteilhaft die fertigungstechnische Herstellung vereinfacht.

Ein geeignetes Verfahren zur Steuerung eines Luftstroms, insbesondere eines Kühlluftstroms in einem Fahrzeug, mit wenigstens einem fahrzeugfrontendseitig angeordneten Lufteinlass für wenigstens einen Luftkanal, der mit wenigstens einem Luftauslass in eine Fronthaube mündet, sieht vor, dass die Fronthaube wenigstens ein verlagerbares Stellelement aufweist, das mit wenigstens einer Betätigungseinrichtung gekoppelt ist, mittels der das wenigstens eine Stellelement, vorzugsweise mittels wenigstens einer Steuereinrichtung gesteuert, in Abhängigkeit von erfassten und/oder ermittelten und/oder vorgegebenen Parametern in eine dem wenigstens einen fronthaubenseitigen Luftauslass verschließende Absperrstellung verlagert wird.

Die sich dadurch ergebenden Vorteile wurden bereits zuvor in Verbindung mit den Vorrichtungsansprüchen ausführlich gewürdigt. Insofern wird zur Vermeidung von Wiederholungen auf die zuvor gemachten Ausführungen verwiesen.

Besonders vorteilhaft ist eine Verfahrensführung, bei der das wenigstens eine verlagerbare Stellelement bei definierten Fahr- und/oder Betriebszuständen, insbesondere zum Beispiel im Anfahrbetrieb oder im Fahrzeugstillstand, und/oder bei definierten klimatischen Bedingungen, insbesondere zum Beispiel bei Schneefall oder bei Temperaturen unter dem Gefrierpunkt, und/oder bei einer Fußgängerkollision, insbesondere bei einer mittels einer frontendseitigen Sensoreinrichtung erfassten tatsächlichen oder bevorstehenden Fußgängerkollision, in die Absperrstellung verlagert wird. Auch hier wurden die Vorteile zuvor bereits ausführlich gewürdigt und wird insofern wird zur Vermeidung von Wiederholungen auf die zuvor gemachten Ausführungen verwiesen.

Die Erfindung wird nachfolgend schematisch und beispielhaft anhand einer Zeichnung näher erläutert.

Es zeigen:
- Fig. 1: eine perspektivische Vorderansicht eines Vorderwagens eines Fahrzeugs,
- Fig. 2: einen schematischen Querschnitt durch den Vorderwagen gemäß Fig. 1 mit abgesenktem Stellelement,
- Fig. 3: eine der Fig. 2 entsprechende Darstellung mit in die Absperrstellung verlagertem Stellelement, und
- Fig. 4: schematisch die Strömungsverhältnisse im Bereich des Luftkanals bei geöffnetem Luftauslass entsprechend Fig. 2.

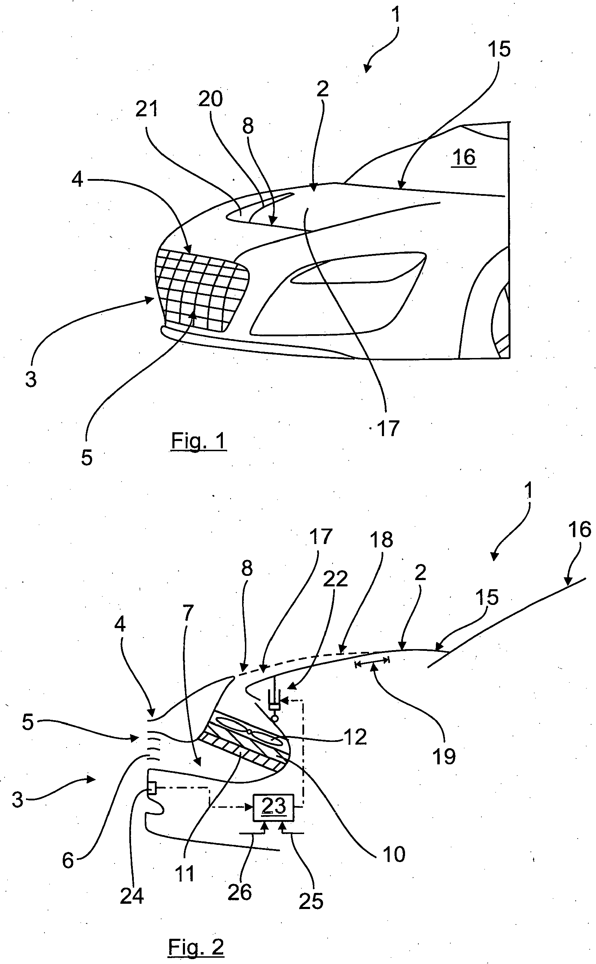

In der Fig. 1 ist schematisch und beispielhaft eine perspektivische Vorderansicht eines Vorderwagens eines Fahrzeugs 1 gezeigt, das hier beispielsweise ein Sportwagen ist, bei dem unter einer Fronthaube 2 ein hier nicht dargestelltes Antriebsaggregat, zum Beispiel eine Brennkraftmaschine, eine Elektromaschine oder ein Hybridantrieb, in an sich üblicher Weise angeordnet und vorderwagenseitig gelagert ist. Im Bereich des Frontendes 3 des Fahrzeugs grenzt an eine vordere Haubenkante 4 der Fronthaube 2 ein Kühlergrill 5 an.

Wie dies insbesondere auch aus der Fig. 2 ersichtlich ist, die einen Querschnitt durch den Vorderwagen zeigt, ist hier beispielhaft im Bereich des Kühlergrills 5 ein Lufteinlass 6 ausgebildet, an den sich ein hier als Kühlluftkanal ausgebildeter Luftkanal 7 anschließt, wobei sich der Luftkanal 7 vom Lufteinlass 6 ausgehend in etwa in Hochachsenrichtung nach oben zur Fronthaube 2 erstreckt und dort in einen hier beispielhaft und bevorzugt als Luftauslassschlitz ausgebildeten Luftauslass 8 mündet. Der wenigstens eine Lufteinlass 6 könnte jedoch auch an jeder anderen geeigneten Stelle des Vorderwagens angeordnet sein, zum Beispiel seitlich neben und/oder über und/oder unter dem Kühlergrill 5.

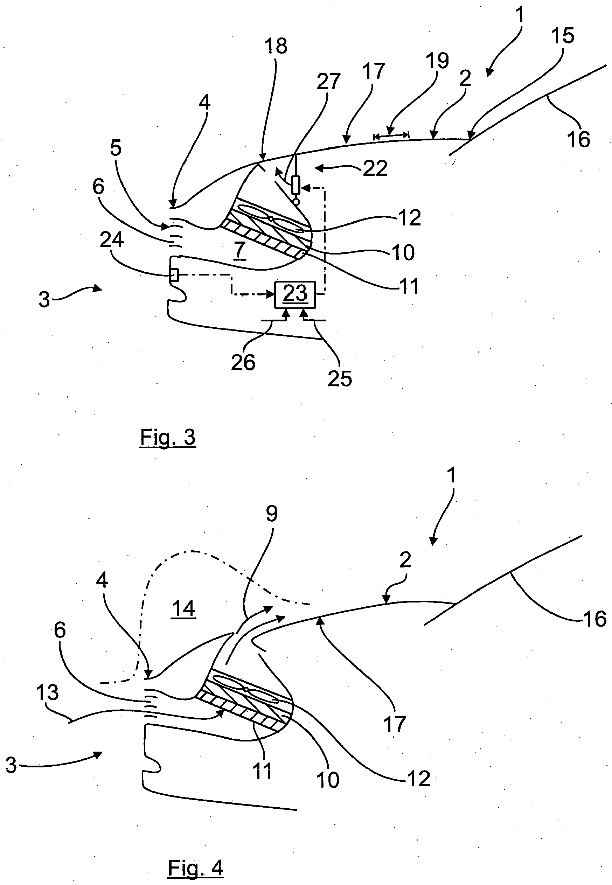

Wie dies insbesondere aus der Fig. 2 ersichtlich ist, bildet der Luftauslass 8 hier eine in Fahrzeuglängsrichtung gesehen im Wesentlichen nach hinten offene Luftauslassöffnung aus, über die ein Luftstrom (Kühlluft 9, siehe Fig. 4) ausströmen kann.

In dem Luftkanal 7 ist im Bereich unterhalb des Luftauslasses 8 ein dem hier nicht dargestellten Antriebsaggregat zugeordneter Motorkühler bzw. Kühler 10 angeordnet, der hier mehrteilig als Kühlermodul ausgebildet ist und dem neben dem eigentlichen Kühleraggregat optional auch ein Klimagerät 11 und/oder ein Lüftermodul 12 zugeordnet sein können.

Die über den kühlergrillseitigen Lufteinlass 6 einströmende Umgebungsluft 13 strömt somit entlang des Luftkanals 7 durch den Kühler 10 und dann als Kühlluft 9 über den Luftauslass 8 in die Umgebung ab (Fig. 4), wodurch sich eine effiziente, optimierte Kühlung des Antriebsaggregates erzielen lässt.

Wie dies weiter aus der Fig. 1 ersichtlich ist, ist der hier beispielhaft als Luftauslassschlitz ausgebildete Luftauslass 8 bezogen auf die Fahrzeugquerrichtung in etwa mittig und zentral an der Fronthaube 2 angeordnet, und zwar, wie in der Fig. 4 strichpunktiert dargestellt in einem Unterdruckbereich 14 der Fronthaube 2, an dem in Fahrbetrieb ein Unterdruck herrscht. Dadurch wird im Fahrbetrieb sichergestellt, dass es im Bereich des Luftauslasses 8 zu keinen den Cw-Wert nachteilig beeinflussenden Luftverwirbelungen und Turbulenzen kommen kann, sondern eine gezielte Strömung der Kühlluft 9 entlang der Fronthaube 2 in Richtung zur sich an eine Hinterkante 15 der Fronthaube 2 anschließenden Windschutzscheibe 16 erfolgt.

Um zu vermeiden, dass im Bereich des Luftauslasses 8 fronthaubenseitige Kanten und Vorsprünge ausgebildet werden bzw. um zu erreichen, dass keinerlei Verunreinigungen, Schnee etc. über den Luftauslass 8 in den Luftkanal 7 eindringen können, ist weiter ein integraler Bestandteile der Fronthaube 2 bildendes verlagerbares Stellelement 17 vorgesehen. Dieses integraler Bestandteil der Fronthaube 2 bildende verlagerbare Stellelement 17 ist hier beispielhaft durch ein einziges, plattenförmiges Flächenelement gebildet, das eine im Wesentlichen rechteckförmige Außenkontur aufweist (siehe insbesondere Fig. 1). Dieses verlagerbare Stellelement 17 ist in der in der Fig. 2 gezeigten Offenstellung bzw. Freigabestellung des Luftauslasses 8, bezogen auf die Hochachsenrichtung, gegenüber der hier durch die strichlierte Linie gebildeten Fronthaubenoberfläche 18 abgesenkt und bildet hier somit einen Luftauslass 8 aus bzw. gibt diesen frei.

Das verlagerbare Stellelement 17 könnte hier grundsätzlich in der Art einer Schwenkklappe um eine in die Fronthaube 2 integrierte Schwenkachse verschwenkbar sein. Eine derartige Schwenkachse sollte dann von der Sichtseite der Fronthaube 2 her unsichtbar sein. Dies kann beispielsweise durch eine Materialschwächung an der der Sichtseite abgewandten Unterseite der Fronthaube 2 realisiert werden oder aber durch eine Art Filmscharnier bewirkt werden. Erfindungsgemäß wird die Verschwenkbarkeit des in der Art einer Schwenkklappe verlagerbaren und in die Fronthaube 2 integrierten Stellelementes 17 jedoch, wie in den Fig. 1 bis 3 schematisch dargestellt, durch die Ausnutzung von elastischen Materialeigenschaften der Fronthaube 2 im Anbindungs- bzw. Anlenkbereich 19 des Stellementes 17 an der Fronthaube 2 erzielt. D.h., dass die Fronthaube 2 wenigstens in dem diesem, einen fronthaubenseitigen Anbindung- bzw. Anlenkbereich 19 ausbildenden Schwenkbereich, in dem das Stellelement 17 verschwenkt wird, elastisch ausgebildet ist, so dass das Stellelement 17 in diesem bzw. durch diesen Bereich in jedwede gewünschte Verlagerungsposition verlagerbar bzw. verschwenkbar ist, und zwar ohne bleibende plastische bzw. dauerhafte Verformung. Zu diesem Zweck kann die Fronthaube 2 zumindest bereichsweise aus einem Kunststoffmaterial und/oder zumindest bereichsweise aus einem diese Elastizitätseigenschaften aufweisenden Stahl- oder Blechmaterial hergestellt sein.

Wie dies weiter aus den Figuren ersichtlich ist, erstreckt sich dieser Anbindungs- bzw. Anlenkbereich 19 in etwa in Fahrzeugquerrichtung und ist vom Luftauslass 8 in Fahrzeuglängsrichtung gesehen nach hinten zur Windschutzscheibe 16 hin beabstandet, so dass sich das verlagerbare Stellelement 17 in der hier gezeigten Ausführungsform in Fahrzeuglängsrichtung gesehen nach hinten zur Windschutzscheibe 16 hin an den Luftauslass 8 anschließt.

Das verlagerbare Stellelement 17 grenzt in der in der Fig. 1 und Fig. 2 gezeigten abgesenkten Freigabe- bzw. Offenstellung mit seinen gegenüberliegenden seitlichen Randbereichen 20, von denen in der Fig. 1 lediglich einer gezeigt ist, jeweils an einen zugeordneten seitlichen Fronthaubenwandbereich 21 an, und zwar unmittelbar bzw. dicht an, wobei dieser seitliche Fronthaubenwandbereich 21 bevorzugt in Fahrzeughochachsenrichtung gesehen vertikal ausgerichtet ist, zum Beispiel durch eine entsprechende Abkantung ausgebildet ist.

Wie dies weiter aus der Fig. 2 ersichtlich ist, ist das verlagerbare Stellelement 17 mit einer hier lediglich äußerst schematisch und beispielhaft dargestellten Betätigungseinrichtung 22, zum Beispiel einem Aktuator oder dergleichen, gekoppelt, der mittels einer Steuereinrichtung 23 ansteuerbar ist. Diese Steuereinrichtung 23 kann beispielsweise mit einer frontendseitig angeordneten Sensoreinrichtung 24 signaltechnisch gekoppelt sein, die beispielsweise eine drohende bzw. tatsächliche Fußgängerkollision erfasst und an die Steuereinrichtung 23 übermittelt, so dass diese die Betätigungseinrichtung 22 ansteuert, die dann wiederum das Stellelement 17 aus der in der Fig. 2 gezeigten abgesenkten Freigabestellung in die in der Fig. 3 gezeigte Absperrstellung (Pfeil 27) anhebt, in der der fronthaubenseitige Luftauslass 8, wie in der Fig. 3 dargestellt, abgesperrt bzw. verschlossen ist.

Dieses Verschließen kann, wie dies in der Fig. 2 und auch in der Fig. 3 durch die zusätzlichen Signalpfeile 25 und 26 angedeutet ist, selbstverständlich auch in Abhängigkeit von jedweden anderen geeigneten und vorgegebenen Parametern erfolgen, wobei als geeignete Parameter insbesondere Umgebungs- und/oder Betriebs- und/oder Fahrparameter vorgegeben werden können. Zum Beispiel, ob sich das Fahrzeug im Anfahrbetrieb oder im Fahrzeugstillstand befindet, oder ob bestimmte klimatische Bedingungen, zum Beispiel Regen, Schneefall oder Temperaturen unter dem Gefrierpunkt vorliegen. Insbesondere bei Schneefall kann das Eindringen von Schnee in den Luftauslass 8 vermieden werden und damit das Vereisen des Kühlers bzw. eines diesem gegebenenfalls zugeordneten Lüfters vermieden werden. Wie dies weiter lediglich schematisch aus der Fig. 3 hervorgeht, ist das verlagerbare Stellelement 17 in der Absperrstellung so an der Fronthaube angeordnet, dass dieses oberflächenbündig in die jeweils angrenzenden Fronthaubenbereiche übergeht, das heißt im Wesentlichen naht- und kantenlos in die angrenzenden Fronthaubenbereiche übergeht. Dadurch wird im Stellelementbereich zusammen mit den angrenzenden Fronthaubenbereichen eine durchgehend ebene bzw. glatte Fronthaubenoberfläche ausgebildet und somit Aufprallkanten vermieden, was insbesondere für den Fußgängerschutz von Vorteil sein kann.

## Patentansprüche

1. Fahrzeug, insbesondere Kraftfahrzeug, mit wenigstens einem fahrzeugfrontendseitig angeordneten Lufteinlass (6) für wenigstens einen Luftkanal (7), der mit wenigstens einem Luftauslass (8) in eine Fronthaube (2) des Fahrzeugs (1) mündet, wobei die Fronthaube (2) wenigstens ein verlagerbares Stellelement (17) aufweist, mittels dem der wenigstens eine fronthaubenseitige Luftauslass (8) verschließbar ist, **dadurch gekennzeichnet, dass** die Fronthaube (2) wenigstens in einem Anbindungs- und/oder Anlenkbereich (19) des verlagerbaren Stellelementes (17) dergestalt elastisch ausgebildet ist, dass das verlagerbare Stellelement (17) dort durch die Ausnutzung der elastischen Materialeigenschaften in diesem Bereich der Fronthaube (2) schwenkbar an der Fronthaube (2) gelagert ist.

2. Fahrzeug nach Anspruch 1, **dadurch gekennzeichnet, dass** der wenigstens eine Luftkanal (7) ein unterhalb der Fronthaube (2) verlaufender Kühlluftkanal ist, in dem ein Kühler (10), insbesondere ein Motorkühler eines Antriebsaggregates des Fahrzeugs, angeordnet ist.

3. Fahrzeug nach Anspruch 1 oder 2, **dadurch gekennzeichnet, dass** der wenigstens eine fahrzeugfrontendseitige Lufteinlass (6) im Bereich eines Kühlergrills (5) und/oder in einem kühlergrillnahen Bereich des Frontendes (3) mündet und sich der wenigstens eine Luftkanal (7) von dort ausgehend in Hochachsenrichtung nach oben zur Fronthaube (2) erstreckt.

4. Fahrzeug nach einem der vorhergehenden Ansprüche, **dadurch gekennzeichnet, dass** das wenigstens eine verlagerbare Stellelement (17) mit wenigstens einer Betätigungseinrichtung (22), insbesondere mit wenigstens einem Aktuator, gekoppelt ist, mittels der das wenigstens eine Stellelement (17), vorzugsweise gesteuert mittels wenigstens einer Steuereinrichtung und/oder in Abhängigkeit von erfassten, insbesondere mittels wenigstens einer Sensoreinrichtung erfassten, und/oder ermittelten und/oder vorgegebenen Parametern, insbesondere Umgebungs- und/oder Betriebs- und/oder Fahrparameter, in eine definiert vorgegebene Stellung verlagerbar ist.

5. Fahrzeug nach einem der vorhergehenden Ansprüche, **dadurch gekennzeichnet, dass** der wenigstens eine Luftauslass (8) in einem Unterdruckbereich (14) der Fronthaube (2) angeordnet ist, an dem im Fahrbetrieb ein Unterdruck herrscht, insbesondere der wenigstens eine Luftauslass (8) in der bezogen auf die Fahrzeuglängsrichtung vorderen und damit der vorderen Haubenkante (4) zugewandten Hälfte der Fronthaube (2) angeordnet ist.

6. Fahrzeug nach einem der vorhergehenden Ansprüche, **dadurch gekennzeichnet, dass** das wenigstens eine verlagerbare Stellelement (17) Bestandteil, vorzugsweise integral verlagerbarer Bestandteil, der Fronthaube (2) ist und/oder dass das verlagerbare Stellelement (17) durch wenigstens ein, insbesondere ein einziges, plattenförmiges Flächenelement gebildet ist, insbesondere mit einer in etwa rechteckförmigen Außenkontur.

7. Fahrzeug nach einem der vorhergehenden Ansprüche, **dadurch gekennzeichnet, dass** das wenigstens eine verlagerbare Stellelement (17) so ausgebildet ist und/oder so an der Fronthaube (2) angeordnet ist, dass dieses in der Absperrstellung oberflächenbündig in den jeweils angrenzenden Fronthaubenbereich übergeht, insbesondere im Wesentlichen naht- und kantenlos in die angrenzenden Fronthaubenbereiche übergeht und/oder im Stellelementbereich zusammen mit den angrenzenden Fronthaubenbereichen eine durchgehend ebene und/oder glatte Fronthaubenoberfläche (18) ausbildet.

8. Fahrzeug nach einem der vorhergehenden Ansprüche, **dadurch gekennzeichnet, dass** das wenigstens eine verlagerbare Stellelement (17) in einer den wenigstens einen Luftauslass (8) freigebenden Freigabestellung wenigstens bereichsweise in Hochachsenrichtung gegenüber der Absperrstellung und/oder gegenüber der Fronthaubenoberfläche (18) abgesenkt ist.

9. Fahrzeug nach einem der vorhergehenden Ansprüche, **dadurch gekennzeichnet, dass** sich das wenigstens eine verlagerbare Stellelement (17) in Fahrzeuglängsrichtung gesehen nach hinten zur Windschutzscheibe (16) hin an den wenigstens einen und/oder an einen zugeordneten Luftauslass (8) anschließt.

10. Fahrzeug nach einem der vorhergehenden Ansprüche, **dadurch gekennzeichnet, dass** der wenigstens eine Luftauslass (8) in der Freigabestellung des wenigstens einen verlagerbaren Stellelementes (17) eine in Fahrzeuglängsrichtung gesehen im Wesentlichen nach hinten offene Luftauslassöffnung ausbildet, insbesondere dergestalt, dass der durch die wenigstens eine Luftauslassöffnung ausströmende Luftstrom (9) entlang des wenigstens einen, sich dort in der Freigabestellung, insbesondere rampenförmig, nach hinten zur Windschutzscheibe (16) hin anschließenden verlagerbaren Stellelementes (17) in Richtung Windschutzscheibe (16) strömt.

11. Fahrzeug nach einem der vorhergehenden Ansprüche, **dadurch gekennzeichnet, dass** der wenigstens eine Luftauslass (8) in der Freigabestellung des wenigstens einen verlagerbaren Stellelementes (17) als im Wesentlichen in Fahrzeugquerrichtung verlaufender Luftauslassschlitz ausgebildet ist, insbesondere dergestalt, dass ein einziger Luftauslassschlitz in einem bezogen auf die Fahrzeugquerrichtung mittleren Fronthaubenbereich angeordnet ist.

## Claims

1. Vehicle, in particular motor vehicle, having at least one air inlet (6) at the front vehicle end for at least one air duct (7) which leads, with at least one air outlet (8), into a bonnet (2) of the vehicle (1), wherein the bonnet (2) has at least one displaceable adjusting element (17) by means of which the at least one bonnet-side air outlet (8) can be closed, **characterised in that** the bonnet (2) is designed to be elastic in at least one linking or pivot area (19) of the displaceable adjusting element (17) such that the displaceable adjusting element (17) is pivotably mounted on the bonnet (2) there through the utilisation of the elastic material properties in this area of the bonnet (2).

2. Vehicle according to claim 1, **characterised in that** the at least one air duct (7) is a cooling air duct running below the bonnet (2) in which cooling air duct a radiator (10), in particular a motor cooler of a drive unit of the vehicle, is arranged.

3. Vehicle according to claim 1 or 2, **characterised in that** the at least one air inlet (6) at the front vehicle end opens in the region of a radiator grille (5) and/or in a region close to the radiator grille of the front end (3) and the at least one air duct (7), starting from there, extends upwards in the vertical axis direction to the bonnet (2).

4. Vehicle according to one of the preceding claims, **characterised in that** the at least one displaceable adjusting element (17) is coupled with at least one actuating device (22), in particular with at least one actuator, by means of which the at least one adjusting element (17), preferably controlled by means of at least one control device and/or as a function of parameters detected, in particular parameters detected by at least one sensor device, and/or determined and/or predetermined parameters, in particular environmental and/or operating and/or driving parameters, can be displaced into a defined predetermined position.

5. Vehicle according to one of the preceding claims, **characterised in that** the at least one air outlet (8) is arranged in a negative pressure area (14) of the bonnet (2) at which negative pressure prevails in driving operation, in particular **in that** the at least one air outlet (8) is arranged in the front bonnet edge (4) relative to the vehicle's longitudinal direction and thus the half of the bonnet (2) facing the front bonnet edge.

6. Vehicle according to one of the preceding claims, **characterised in that** the at least one displaceable adjusting element (17) is a part, preferably an integrally displaceable part, of the bonnet (2) and/or **in that** the displaceable adjusting element (17) is formed by at least one, in particular a single, plate-shaped surface element, in particular with an approximately rectangular outer contour.

7. Vehicle according to one of the preceding claims, **characterised in that** the at least one displaceable adjusting element (17) is designed and/or arranged on the bonnet (2) so that, in the locking position, this merges flush into the respective adjacent bonnet area, in particular merging substantially seamlessly and edgelessly into the adjacent bonnet area and/or, together with the adjacent bonnet areas, forms a continuous flat and/or smooth bonnet surface (18) in the adjusting element area.

8. Vehicle according to one of the preceding claims, **characterised in that** the at least one displaceable adjusting element (17) is lowered in a release position releasing the at least one air outlet (8) at least partially in the vertical axis direction opposite the locking position and/or opposite the bonnet surface (18).

9. Vehicle according to one of the preceding claims, **characterised in that** the at least one displaceable adjusting element (17) connects, in the rear towards the windscreen (16) in the vehicle's longitudinal direction, to the at least one and/or an associated air outlet (8).

10. Vehicle according to one of the preceding claims, **characterised in that** the at least one air outlet (8) forms an open air outlet opening substantially to the rear in the release position of the at least one displaceable adjusting element (17), in particular such that the air flow (9) passing through the at least one air outlet flows along the at least one displaceable adjusting element (17) connecting there in the release position, in particular as a ramp in the rear towards the windscreen (16) in the direction of the windscreen (16).

11. Vehicle according to one of the preceding claims, **characterised in that** the at least one air outlet (8) is designed as an air outlet slot substantially running in the vehicle's transverse direction in the release position of the at least one displaceable adjusting element (17), in particular such that a single air outlet slot is arranged in a central bonnet area relative to the vehicle's transverse direction.

## Revendications

1. Véhicule, en particulier véhicule automobile, comprenant au moins une entrée d'air (6), disposée du côté de l'extrémité avant du véhicule, pour au moins un canal d'air (7) qui débouche par au moins une sortie d'air (8) dans un capot avant (2) du véhicule (1), le capot avant (2) présentant au moins un élément de réglage (17) déplaçable, au moyen duquel l'au moins une sortie d'air (8) située du côté du capot avant peut être fermée, **caractérisé en ce que** le capot avant (2) est réalisé de manière élastique au moins dans une zone de liaison et/ou d'articulation (19) de l'élément de réglage (17) déplaçable de telle manière que l'élément de réglage (17) déplaçable est logé au niveau du capot avant (2) de manière à pouvoir pivoter à cet endroit par l'exploitation des propriétés élastiques du matériau dans ladite zone du capot avant (2).

2. Véhicule selon la revendication 1, **caractérisé en ce que** l'au moins un canal d'air (7) est un canal d'air de refroidissement s'étendant sous le capot avant (2), dans lequel un radiateur (10), en particulier un radiateur de moteur d'un groupe moteur du véhicule, est disposé.

3. Véhicule selon la revendication 1 ou 2, **caractérisé en ce que** l'au moins une entrée d'air (6) située du côté de l'extrémité avant du véhicule débouche dans la zone d'une calandre (5) et/ou dans une zone, proche de la calandre, de l'extrémité avant (3), et **en ce que** l'au moins un canal d'air (7) s'étend en partant de cet endroit vers le haut en direction du capot avant (2).

4. Véhicule selon l'une quelconque des revendications précédentes, **caractérisé en ce que** l'au moins un élément de réglage (17) déplaçable est couplé à au moins un dispositif d'actionnement (22), en particulier à au moins un actionneur, au moyen duquel l'au moins un élément de réglage (17), commandé de préférence au moyen d'au moins un dispositif de commande et/ou en fonction de paramètres détectés, en particulier détectés au moyen d'au moins un dispositif capteur, et/ou déterminés et/ou spécifiés, en particulier des paramètres d'environnement et/ou de fonctionnement et/ou de conduite, peut être déplacé dans une position spécifiée de manière définie.

5. Véhicule selon l'une quelconque des revendications précédentes, **caractérisé en ce que** l'au moins une sortie d'air (8) est disposée dans une zone de dépression (14) du capot avant (2), dans laquelle il règne une dépression au cours de la conduite, en particulier **en ce que** l'au moins une sortie d'air (8) étant disposée dans la moitié, qui est à l'avant par rapport à la direction longitudinale de véhicule et qui ainsi est tournée vers le bord de capot (4) avant, du capot avant (2).

6. Véhicule selon l'une quelconque des revendications précédentes, **caractérisé en ce que** l'au moins un élément de réglage (17) déplaçable fait partie du capot avant (2), de préférence est une partie intégralement déplaçable du capot avant, et/ou en ce que l'élément de réglage (17) déplaçable est formé par au moins un élément de surface, en particulier un seul élément de surface en forme de plaque, en particulier présentant un contour extérieur à peu près de forme rectangulaire.

7. Véhicule selon l'une quelconque des revendications précédentes, **caractérisé en ce que** l'au moins un élément de réglage (17) déplaçable est réalisé de telle sorte et/ou est disposé de telle sorte sur le capot avant (2) qu'il se confond, dans la position fermée, à fleur de la surface, dans la zone de capot avant respectivement adjacente, en particulier dans les zones de capot avant adjacentes sensiblement sans joint ni arête, et/ou qu'il forme, dans la zone d'élément de réglage, conjointement avec les zones de capot avant adjacentes, une surface de capot avant (18) plane et/ou lisse en continu.

8. Véhicule selon l'une quelconque des revendications précédentes, **caractérisé en ce que**, dans une position de dégagement dégageant l'au moins une sortie d'air (8), l'au moins un élément de réglage (17) déplaçable est abaissé au moins par endroits dans la direction d'axe vertical par rapport à la position fermée et/ou par rapport à la surface de capot avant (18).

9. Véhicule selon l'une quelconque des revendications précédentes, **caractérisé en ce que** l'au moins un élément de réglage (17) déplaçable se raccorde, vu dans la direction longitudinale de véhicule, vers l'arrière en direction du pare-brise (16), à l'au moins une sortie d'air (8) et/ou à une sortie d'air associée.

10. Véhicule selon l'une quelconque des revendications précédentes, **caractérisé en ce que**, lorsque l'au moins un élément de réglage (17) déplaçable est dans la position de dégagement, l'au moins une sortie d'air (8) forme une ouverture de sortie d'air sensiblement ouverte vers l'arrière vue dans la direction longitudinale de véhicule, en particulier de telle manière que le flux d'air (9) s'écoulant par l'au moins une ouverture de sortie d'air s'écoule en direction du pare-brise (16) le long de l'au moins un élément de réglage (17) déplaçable se raccordant à cet endroit dans la position de dégagement, en particulier sous la forme d'une rampe, vers l'arrière en direction du pare-brise (16).

11. Véhicule selon l'une quelconque des revendications précédentes, **caractérisé en ce que**, lorsque l'au moins un élément de réglage (17) déplaçable est dans la position de dégagement, l'au moins une sortie d'air (8) est réalisée sous la forme d'une fente de sortie d'air s'étendant sensiblement dans la direction transversale de véhicule, en particulier de telle manière qu'une seule fente de sortie d'air est disposée dans une zone de capot avant médiane par rapport à la direction transversale de véhicule.
